# EUROPÄISCHE PATENTSCHRIFT

(11) **EP 3 766 844 B1**
(45) Veröffentlichungstag und Bekanntmachung des Hinweises auf die Patenterteilung: **01.04.2026**
(21) Anmeldenummer: 19186745.6
(22) Anmeldetag: 17.07.2019
(51) Int. Cl.: C03B 37/012

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET D'UNE PRÉFORME DE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); EHRENTRAUT, Enrico, 63450 Hanau (DE); KOSTKA, David, 63450 Hanau (DE); TROMMER, Martin, 63450 Hanau (DE); WEIMANN, Steffen, 63450 Hanau (DE); HÜNERMANN, Michael, 63450 Hanau (DE); SCHUSTER, Kay, 63450 Hanau (DE)
(74) Vertreter: Gille Hrabal Partnerschaftsgesellschaft mbB Patentanwälte

(56) Entgegenhaltungen:
- EP-A1- 3 136 143
- WO-A1-2018/169487
- US-A1- 2003 172 682
- US-A1- 2005 226 578
- US-A1- 2008 310 806
- "University of Bath PhD.", 31 December 2013, article FEI YU: "Hollow core negative curvature fibres", pages: 59 - 74, XP055656461
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972
- BEN SHERLOCK ET AL: "Tunable fibre-coupled multiphoton microscopy with a negative curvature fibre", JOURNAL OF BIOPHOTONICS, vol. 9, no. 7, 15 March 2016 (2016-03-15), DE, pages 715 - 720, XP055299632, ISSN: 1864-063X, DOI: 10.1002/jbio.201500290
- GREGORY T. JASION ET AL: "Fabrication of tubular anti-resonant hollow core fibers: modelling, draw dynamics and process optimization", OPTICS EXPRESS, vol. 27, no. 15, 10 July 2019 (2019-07-10), pages 20567, XP055655469, DOI: 10.1364/OE.27.020567

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen einer primären Vorform für die Hohlkernfaser, die einen hohlen Kernbereich und einen Mantelbereich aufweist, der mindestens ein Hüllrohr umfasst, das eine Hüllrohr-Innenbohrung und eine Hüllrohr-Längsachse aufweist, entlang der sich eine von einer Innenmantelfläche und einer Außenmantelfläche begrenzte Hüllrohr-Wandung erstreckt, wobei im Mantelbereich eine Anzahl von rohrförmigen und/oder hohlkanalförmigen Antiresonanzelement-Vorformlingen angeordnet sind,
(b) Weiterverarbeitung der primären Vorform zu einer sekundären Vorform, die eine einmalige oder wiederholte Durchführung von einem oder mehreren der folgenden Heißformprozesse umfasst:
   (i) Aufkollabieren von zusätzlichem Mantelmaterial und anschließendes Elongieren,
   (ii) Aufkollabieren von zusätzlichem Mantelmaterial und gleichzeitiges Elongieren, und
(c) Ziehen der Hohlkernfaser aus der sekundären Vorform. Gemäß Verfahrensschritt (a) wird eine primäre Vorform bereitgestellt, die einen Außendurchmesser im Bereich von 20 mm bis 70 mm aufweist.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen einer primären Vorform für die Hohlkernfaser, die einen hohlen Kernbereich und einen Mantelbereich aufweist, der mindestens ein Hüllrohr umfasst, das eine Hüllrohr-Innenbohrung und eine Hüllrohr-Längsachse aufweist, entlang der sich eine von einer Innenmantelfläche und einer Außenmantelfläche begrenzte Hüllrohr-Wandung erstreckt, wobei im Mantelbereich eine Anzahl von rohrförmigen und/oder hohlkanalförmigen Antiresonanzelement-Vorformlingen angeordnet sind,
   und
(b) Weiterverarbeitung der primären Vorform zu einer sekundären Vorform, die eine einmalige oder wiederholte Durchführung von einem oder mehreren der folgenden Heißformprozesse umfasst:
   (i) Aufkollabieren von zusätzlichem Mantelmaterial und anschließendes Elongieren,
   (ii) Aufkollabieren von zusätzlichem Mantelmaterial und gleichzeitiges Elongieren. Gemäß Verfahrensschritt (a) wird eine primäre

Vorform bereitgestellt, die einen Außendurchmesser im Bereich von 20 mm bis 70 mm aufweist.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Fei Yu: "Hollow core negative curvature fibres'; in: "University of Bath PhD.", (2013-12-31), Seiten 59-74, offenbart ein Verfahren zur Herstellung einer Antiresonanten Hohlkemfaser, die einen sich entlang einer Faser-Längsachse erstreckenden Hohlkern und einen den Hohlkern umgebenden inneren Mantelbereich aufweist, der mehrere Antiresonanzelemente enthält. Die Herstellung der Hohlkernfaser umfasst die Verfahrensschritte: Bereitstellen eines Hüllrohres; Anordnen einer Anzahl von rohrförmigen Antiresonanzelement-Vorformlingen an Soll-Positionen der Innenseite der Hüllrohr-Wandung unter Bildung einer primären Vorform, und Weiterverarbeitung der primären Vorform, umfassend ein Elongieren zu einer sekundären Vorform (Cane), aus der die Hohlkernfaser gezogen wird. In der sekundären Vorform weisen die Antiresonanzelement-Vorformlinge einen nicht runden Querschnitt auf. Beim anschließenden Ziehen der Hohlkernfaser werden verschiedene Bereiche der sekundären Vorform mit unterschiedlichen Drücken beaufschlagt.

Gregory T. Jasion et al.: "Fabrication of tubular anti-resonant hollow core fibers: modelling, draw dynamics and process optimization", OPTICS EXPRESS, Bd. 27, Nr. 15, (2019-07-10), Seiten 20567-20582, DOI: 10.1364/OE.27.020567, offenbart ein Verfahren zur Herstellung einer Antiresonanten Hohlkemfaser, die einen sich entlang einer Faser-Längsachse erstreckenden Hohlkern und einen den Hohlkern umgebenden inneren Mantelbereich aufweist, der mehrere Antiresonanzelemente enthält. Das Verfahren umfasst die Verfahrensschritte: Bereitstellen eines Hüllrohres mit einem Außendurchmesser im Bereich von 20 bis 30 mm; Anordnen einer Anzahl von rohrförmigen Antiresonanzelement-Vorformlingen an Soll-Positionen der Innenseite der Hüllrohr-Wandung unter Bildung einer primären Vorform, und Weiterverarbeitung der primären Vorform. Die Weiterverarbeitung umfasst ein Elongieren zu einer sekundären Vorform (Cane) mit einem Außendurchmesser von circa 3 mm, aus der die Hohlkernfaser gezogen wird. In der sekundären Vorform weisen die Antiresonanzelement-Vorformlinge eine ovale Außenquerschnittsform auf, mit einer längsten Querschnittsachse und einer kürzesten Querschnittsachse, wobei die kürzeste Querschnittsachse von der Hüllrohr-Längsachse aus gesehen in radialer Richtung verläuft. Die sekundäre Vorform (Cane) wird beim Faserziehprozess von einem äußeren Mantelrohr mit einem Außendurchmesser im Bereich von 10 bis 30 mm überfangen.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzelement-Außenrohr (kurz: ARE-Außenrohr) und einseitig an der Innenmantelfläche des ARE-Außenrohres eingeschweißtem Antiresonanzelement-Innenrohr (kurz: ARE-Innenrohr), an der Innenseite eines Hüllrohres angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass eine sekundäre Vorform gebildet wird, die einen Außendurchmesser im Bereich von 30 bis 90 mm aufweist, und dass vor dem Ziehen der Hohlkernfaser gemäß Verfahrensschritt (c) mindestens eines der stirnseitigen Enden der Antiresonanzelement-Vorformlinge verschlossen wird.

Ausgangspunkt für die Herstellung der Antiresonanten Hohlkernfaser ist eine Vorform, die hier auch als "Cane" oder als "primäre Vorform" bezeichnet wird. Sie umfasst ein Hüllrohr, in dem oder an dem Vorstufen oder Vorformlinge für die Ausformung Antiresonananter Elemente in den Hohlkernfasern (hier kurz als "Antiresonanzelemente" bezeichnet) enthalten sind. Die primäre Vorform kann zu der Hohlkernfaser elongiert werden, in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehrere Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Das Hinzufügen von Mantelmaterial umfasst das Aufkollabieren eines Überfangzylinders auf die primäre Vorform. Die koaxiale Anordnung aus primärer Vorform und Überfangzylinder wird beim Aufkollabieren des Überfangzylinders elongiert, oder sie wird nicht elongiert. Dabei werden die Antiresonanzelement-Vorformling in ihrer Form oder Anordnung verändert, oder sie werden in ihrer Form oder Anordnung nicht verändert.

Die Herstellung der Vorform umfasst eine Anzahl von Verfahrensschritten, bei denen Ausgangselemente der Hohlkernfaser hergestellt und zueinander positioniert werden und mindestens einen Heißverformungsschritt. Jedes der Ausgangselemente weist eine gewisse Abweichung von seiner Sollgeometrie auf und jeder Schritt der Positionierung und Umformung führt zwangsläufig zu Geometrieabweichungen, die sich in der fertigen Vorform zu einem absoluten Geometriefehler aufsummieren. Insbesondere die Heißumformung von Glas kann bei geringsten Abweichungen von einem idealen in der Regel zylindersymmetrischen Temperaturprofil der Heizzone zu einer ungewollten und nicht reproduzierbaren Verformung führen.

Die beim erfindungsgemäßen Verfahren zum Faserziehprozess eingesetzte Vorform zeichnet sich durch einen Außendurchmesser im Bereich von 30 bis 90 mm aus. Dies ist im Vergleich zum derzeitigen Stand der Technik ein großer Außendurchmesser. Da mit zunehmendem Außendurchmesser der Vorform die vorhandene absolute Geometriefehler beim Faserziehen stärker herunterskaliert werden, wird so eine präzisere Fertigung der Hohlkernfaser grundsätzlich ermöglicht.

Es hat sich jedoch gezeigt, dass eine beliebige Vergrößerung des Vorform-Außendurchmessers nicht automatisch zu einer präziseren Hohlkernfaser führt, sondern, dass zur Einhaltung eines maximalen relativen Geometriefehlers von 3,5% in der Wanddicke Antiresonanzelemente in der Hohlkernfaser folgende Randbedingungen einzuhalten sind.
I. Der Vorform-Außendurchmesser beträgt maximal 90 mm. Bei größeren Durchmessern bilden sich im Faserziehprozess Temperaturgradienten innerhalb des Vorformvolumens, die in Abweichungen der Wanddicke bei den Antiresonanzelementen in der Hohlkernfaser von mehr als 3,5% resultieren. Die Bezugsgröße für die %-Angabe ist die mittlere Wanddicke.
II. Der Vorform-Außendurchmesser beträgt mindestens 30 mm Es hat sich gezeigt, dass Antiresonanzelement-Vorformlinge realisierbar sind, bei denen die Wanddickenabweichung etwa 4 µm beträgt. Bei kleineren Vorform-Außendurchmessern als 30 mm führt dieser absolute Fehler bei den Vorformlingen zu einem relativen Fehler in der Wanddicke der Antiresonanzelemente in der fertigen Hohlkernfaser von mehr als 3,5 %.
III. Alle Antiresonanzelement-Vorformlinge oder mindestens ein Teil bilden Hohlkanäle und sind in der Regel beidseitig offen. Der freie Innendurchmesser der Hohlkanäle ist klein und liegt in der Vorform typischerweise im Bereich einiger Millimeter. Beim Heißformprozess wird die Vorform von außen erwärmt, so dass sich im Vorform-Volumen ein radialer Temperaturgradient einstellt. Dieser ist - bei ansonsten gleichen Prozessbedingungen - umso größer je dicker die Vorform ist. Es besteht die Gefahr, dass die Hohlkanäle infolge der Oberflächenspannung und abhängig von der lokalen Temperatur unterschiedlich schrumpfen. Diese Gefahr ist umso größer, je größer der radiale Temperaturgradient und je dicker die Vorform ist. Auf den zentralen Hohlkern hat der Temperaturgradient hingegen keine wesentlichen Auswirkungen.

Um diesem Effekt bei den erfindungsgemäß relativ dicken Vorformen zu begegnen, wird beim Faserziehprozess mit vertikaler Orientierung der Längsachsen der Kernbereich (Hohlkern) offen gelassen, aber bei mindestens einem Teil der Antiresonanzelement-Vorform linge das ansonsten offene, obere Ende verschlossen.
Die Versieglung des Antiresonanzelement-Vorformlings oder der Antiresonanzelement-Vorformlinge erfolgt vor Beginn des Faserziehprozess und sie bleibt auch während des Faserziehprozesses bestehen. Durch die Versiegelung des oberen Endes hat jeder Hohlkanal ein anfängliches Gasvolumen. Beim Faserziehprozess wird das Gas erwärmt und der Druck in den Hohlkanälen erhöht, so dass sich diese von unten beginnend nach oben hin aufweiten. Da der Gasaustausch in den engen Hohlkanälen gering ist und das heiße Gas nicht nach oben entweichen kann, bestimmt der Temperatur-Unterschied zwischen unterem und oberem Vorform-Ende maßgeblich das Maß der Expansion, und zwar im Wesentlichen unabhängig vom ursprünglichen Hohlkanal-Durchmesser. Dieser Temperaturunterschied ist aber für alle Hohlkanäle unabhängig von ihrer radialen Position etwa gleich groß, so dass sich alle Hohlkanäle etwa im gleichen Maß aufweiten. Dadurch bleibt die ursprüngliche Verteilung der Hohlkanalgrößen in der dicken Vorform auch in der finalen Hohlkernfaser erhalten.

Dieses Konzept eignet sich auch für ein reproduzierbares und präzises Herstellungsverfahren für Antiresonante Hohlkernfasern im industriellen Maßstab. Es ist insbesondere zur präzisen Herstellung Antiresonante Hohlkernfasern mit verschachtelten Antiresonanzelementen geeignet, die stark voneinander abweichende Innendurchmesser haben.

In Verfahrensschritt (a) wird eine primäre Vorform gebildet, die einen Außendurchmesser im Bereich von 20 bis 70 mm aufweist.

Hierbei handelt es sich um einen vergleichsweise großen Außendurchmesser. Im Stand der Technik liegen die Außendurchmesser der primären Vorformen (Canes) typischerweise bei 4 bis 6 mm.

Es hat sich auch als vorteilhaft erweisen, wenn die primäre Vorform in der sekundären Vorform einen inneren Mantelbereich bildet, der einen Außendurchmesser im Bereich von 7 mm bis 50 mm aufweist.

Der hohle Kernbereich und das Material für den inneren Mantelbereich der sekundären Vorform werden von der primären Vorform vorgegeben. Diese umfasst den Hohlkern und einen inneren Mantelbereich. Eine Vergrößerung des Außendurchmessers der primären Vorform kann sowohl durch eine Vergrößerung des Hohlkerns erreicht werden (einhergehend mit einer geringeren Dämpfung) als auch durch eine Verringerung des Außendurchmessers der finalen Hohlkernfaser (einhergehend mit einem geringeren Materialeinsatz). Ein Außendurchmesser des inneren Mantelbereichs der sekundären Vorform im Bereich von 7 mm bis 50 mm stellt einen geeigneten Kompromiss dar.

Es hat sich auch bewährt, wenn beim Ziehen der Hohlkernfaser gemäß Verfahrensschritt (c) im Kernbereich ein Innendruck im Bereich zwischen 0,05 mbar bis 20 mbar eingestellt wird.

Bei einem Innendruck von weniger als 0,05 mbar kann es dazu kommen, dass sich die Antiresonanzelement-Vorformlinge beziehungsweise Antiresonanzelement-Vorstufen zu stark aufblähen. Umgekehrt, kann ein Innendruck von mehr als 20 mbar im Kernbereich dazu führen, dass der Gasdruck innerhalb der Hohlkanäle der Antiresonanzelement-Vorformlinge nicht ausreicht, damit sich diese im Heißformprozess ausreichend aufweiten.

Die Temperatur der Heizzone beim Heißformprozess sollte möglichst konstant sein. Vorteilhafterweise wird daher beim Heißformprozess gemäß Verfahrensschritt (d) ein temperaturgeregeltes Heizelement eingesetzt, dessen Soll-Temperatur auf +/- 0.1°C genau gehalten wird.

Dadurch können Temperaturschwankungen im Heißformprozess auf weniger als +/- 0.5°C begrenzt werden.

Bei einer bevorzugten Verfahrensvariante umfasst das Bereitstellen der primären Vorform ein Anordnen der Antiresonanzelement-Vorformlinge an Soll-Positionen der Innenseite der Hüllrohr-Wandung, wobei das Anordnen der Antiresonanzelement-Vorformlinge und/oder das Ziehen der Hohlkernfaser gemäß Verfahrensschritt (c) eine Fixierungs-Maßnahme und/oder eine Versiegelungsmaßnahme unter Einsatz einer amorphe SiO₂-Partikel enthaltenden Versiegelungs- oder Verbindungsmasse umfasst.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die dafür erforderliche niedrige Temperatur unterhalb von 300 °C begünstigt die Einhaltung der Maßhaltigkeit der Vorform und vermeidet thermische Beeinträchtigungen. Durch Erhitzen auf höhere Temperaturen, beispielsweise beim Elongieren der Vorform zur Hohlkernfaser, ist die Versiegelungs- oder Verbindungsmasse auch geeignet, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Bei einer bevorzugten Verfahrensvariante umfasst das Bereitstellen der primären Vorform gemäß Verfahrensschritt (a) ein Anordnen der Antiresonanzelement-Vorformlinge an Soll-Positionen der Innenseite der Hüllrohr-Wandung, wobei das Anordnen der Antiresonanzelement-Vorformlinge mittels einer in die Hüllrohr-Innenbohrung einzuführenden Positionierungsschablone erfolgt, die Halteelemente zur Positionierung der Antiresonanzelement-Vorformlinge an den Soll-Positionen aufweist.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung, beispielsweise mittels der ober erläuterten Versiegelungs- oder Verbindungsmasse. Dabei wird die Positionierungsschablone vorzugsweise ausschließlich im Bereich der Hüllrohr-Stirnseiten eingesetzt, vorzugsweise im Bereich beider Hüllrohr-Stirnseiten.

Die Genauigkeit der Positionierung der Vorformlinge an der Innenmantelfläche des Hüllrohrs wird verbessert, indem die Hüllrohr-Innenseite durch spanende Bearbeitung erzeugt wird, insbesondere durch Bohren, Fräsen, Schleifen, Honen und/oder Polieren.

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Hüllrohr-Innenseite im Bereich von Soll-Positionen der Antiresonanzelement-Vorformlinge, indem diese mit einer sich in Richtung der Hüllrohr-Längsachse erstreckenden Längsstruktur versehen wird. Diese Längsstruktur umfasst beispielsweise Längsschlitze und/oder Längsrillen in der Hüllrohr-Innenwandung, die parallel zur Hüllrohr-Längsachse verlaufen und die bevorzugt durch Bohren, Sägen, Fräsen Schneiden oder Schleifen erzeugt werden.

Die sich in Richtung der Hüllrohr-Längsachse erstreckende Längsstruktur dient als Positionierungshilfe für die Antiresonanzelement-Vorformlinge. Sie erleichtert, dass die Antiresonanzelement-Vorformlinge vorgegebene definierte Positionen an der Innenseite des Hüllrohres einnehmen.

Es hat sich außerdem eine Verfahrensweise bewährt, bei der beim Ziehen der Hohlkernfaser gemäß Verfahrensschritt (c) mehrere Bestandteile der sekundären Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

Bestandteile der Vorform umfassen das Hüllrohr und die darin angeordneten Antiresonanzelement-Vorformlinge sowie zusätzliches Mantelmaterial, das beispielsweise in Form eines Überfangzylinders oder mehrerer Überfangzylinder bereitgestellt und auf die primäre Vorform kollabiert wird. Als die Viskosität von Quarzglas absenkende Dotierstoffe kommen vorzugsweise Fluor, Chlor und/oder Hydroxylgruppen zum Einsatz.

Die Dotierung ermöglich die Anpassung der thermischen Ausdehnungskoeffizienten von benachbarten Vorform-Bestandteilen, um Spannungen zu vermeiden oder zu vermindern. Sie kann auch dazu eingesetzt werden, die thermische Stabilität eines Bestandteils zu Gunsten der Stabilität eines benachbarten Bestandteils zu verringern.

So hat es sich beispielsweise als günstig erwiesen, wenn das Quarzglas des Hüllrohres bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas von zusätzlich aufgebrachtem Mantelmaterial (bei Angabe der Viskosität als logarithmischer Wert in dPas).

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelemente um den Hohlkern mit einer ungeradzahligen Symmetrie angeordnet sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass eine sekundäre Vorform gebildet wird, die einen Außendurchmesser im Bereich von 30 bis 90 mm aufweist, und mindestens eines der stirnseitigen Enden der Antiresonanzelement-Vorformlinge verschlossen ist.

Die sekundäre Vorform ist Ausgangspunkt für die Herstellung der Antiresonanten Hohlkernfaser. Durch Elongieren der Vorform wird die Antiresonante Hohlkernfaser gezogen.

Es wird eine Vorform erzeugt, die im Vergleich zum bisherigen Stand der Technik einen großen Außendurchmesser aufweist, so dass der in der Vorform vorhandene absolute Geometriefehler beim Faserziehen stärker herunterskaliert werden kann.

Mindestens eines der stirnseitigen Enden der Antiresonanzelement-Vorformlinge wird vor dem Faserziehprozess verschlossen. Das zu verschließende stirnseitige Ende ist dasjenige, das beim Elongieren der Vorform bei vertikal orientierter Längsachse das obere Ende darstellt. Die Versieglung des Antiresonanzelement-Vorformlings oder der Antiresonanzelement-Vorformlinge bleibt auch während des Faserziehprozesses bestehen.

Diese Verfahrensweise ermöglicht eine präzisere Fertigung der Hohlkernfaser. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt zu Antiresonanzelementen werden. Die Antiresonanzelement-Vorformlinge können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Aufkollabieren von zusätzlichem Mantelmaterial und anschließendes Elongieren,
(ii) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenmantelfläche zugänglich; sie kann sich auch bis zur Außenmantelfläche durch die gesamte Hüllrohr-Wandung erstrecken.

### Teilchengröße und Teilchengrößenverteilung

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: eine primäre Vorform mit einem Hüllrohr und darin positionierten und fixierten Antiresonanzelement-Vorformlingen zur Herstellung einer Vorform für eine Hohlkernfaser anhand einer Draufsicht auf den radialen Querschnitt, und
- **Figur 2**: die primäre Vorform von Figur 1 nach dem Verschließen der Antiresonanzelement-Vorformlinge zwecks Durchführung des Faserziehprozesses.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

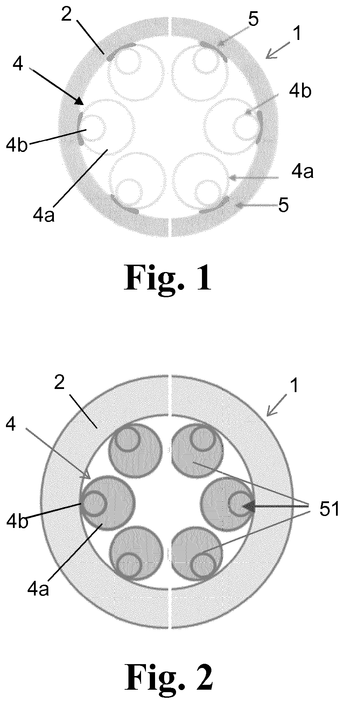

**Figur 1** zeigt schematisch einen Cane (primäre Vorform) mit einem Hüllrohr 1 mit einer Hüllrohr-Wandung 2, an deren Innenmantelfläche an zuvor definierten azimutalen Positionen im gleichmäßigen Abstand Antiresonanzelement-Vorformlinge 4 fixiert sind; im Ausführungsbeispiel sind es sechs Vorformlinge 4, in einer anderen, nicht dargestellten bevorzugten Ausführungsform ist es eine ungeradzahlige Anzahl von Vorformlingen.

Das Hüllrohr 1 besteht aus Quarzglas und hat eine Länge von 700 mm, einen Außendurchmesser von 27 mm und einen Innendurchmesser von 20 mm. Die Antiresonanzelement-Vorformlinge 4 liegen als Ensemble miteinander verschachtelter Strukturelemente aus einem ARE-Außenrohr 4a und einem ARE-Innenrohr 4b vor. Das ARE-Außenrohr 4a hat einen Außendurchmesser von 6,2 mm und das ARE-Innenrohr 4b hat einen Außendurchmesser von 2,5 mm. Die Wandstärke beider Strukturelemente (4a; 4b) ist gleich und beträgt 0,3 mm. Die Längen von ARE-Außenrohr 4a und ARE-Innenrohr 4b entsprechen der Hüllrohr-Länge 1.

Die Fixierung der Antiresonanzelement-Vorformlinge 4 an der Innenwand des Hüllrohres 1 erfolgt mittels der auf SiO₂ basierenden Verbindungsmasse 5.

Die Verbindungsmasse 5 wird auf der Hüllrohr-Innenmantelfläche lokal im Bereich der stirnseitigen Enden aufgetragen und die Antiresonanzelement-Vorformlinge werden darauf unter Einsatz einer Positionierungs-Schablone mit konstruktiv vorgegebener sternförmiger Anordnung von Haltearmen für die einzelnen Antiresonanzelement-Vorformlinge 4 aufgesetzt. Die Positionierungs-Schablone ist dabei auf den Bereich um die beiden stirnseitigen Hüllrohr-Enden beschränkt.

Durch diese Methode wird eine genaue und reproduzierbare Verbindung zwischen Hüllrohr 1 und Antiresonanzelement-Vorformlingen 4 geschaffen. Zur Fixierung genügt eine Verfestigung der Verbindungsmasse 5 bei niedriger Temperatur unterhalb von 300 °C, so dass eine starke Erwärmung der umliegenden Bereiche und somit wird eine Verformung Antiresonanzelement-Vorformlinge 4 vermieden wird.

Die primäre Vorform 1 wird mit einem Überfangzylinder aus Quarzglas überfangen, wobei der Überfangzylinder auf das Hüllrohr 1 aufkollabiert, und gleichzeitig wird das Rohr-Ensemble zu einer sekundären Vorform elongiert. Der Überfangzylinder hat einen Außendurchmesser von 63,4 mm und eine Wandstärke von 17 mm.

Beim Kollabier- und Elongierprozess wird die koaxiale Anordnung von Hüllrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1°C gehalten. Dadurch können Temperaturschwankungen im Heißformprozess auf weniger als +/- 0.5°C begrenzt werden.

Die im Kollabier- und Elongierprozess gebildete sekundäre Vorform hat einen Außendurchmesser von etwa 50 mm und eine aus äußerem Mantel und innerem Mantel zusammengesetzte Mantel-Wanddicke von 16,6 mm. Die maximale Wanddickenschwankung (größter Wert minus kleinster Wert) der Antiresonanzelement-Vorformlinge beträgt weniger als 4 µm. Die sekundäre Vorform wird anschließend zu der Antiresonanten Hohlkernfaser gezogen.

Vorher werden alle Antiresonanzelement-Vorformlinge mit der Versiegelungs- oder Verbindungsmasse verschlossen. Dieser Zustand ist schematisch in **Figur 2** anhand dunkelgrau eingefärbter Flächen angedeutet. Die Verschlussmasse 51 ist dabei nur auf diejenige Stirnseite der Antiresonanzelement-Vorformlinge 4 aufgebracht, die beim Faserziehprozess nach oben gewandt ist.

Die nach oben weisende Stirnseite wird mit einem Halterohr aus Quarzglas verbunden, der gleichzeitig als Gasanschluss dient. Der Halter wird mittels der Versiegelungs- oder Verbindungsmasse am Überfangzylinder und am Hüllrohr fixiert.

Beim Faserziehprozess wird die sekundäre Vorform bei vertikal orientierter Längsachse von oben kommend einer temperaturgeregelten Heizzone zugeführt und darin mit dem unteren Ende beginnend zonenweise erweicht. Gleichzeitig wird dem Kernbereich (Hohlkern) Gas zugeführt, so dass sich im Kernbereich ein Innendruck von 4 mbar einstellt.

Die Heizzone wird auf eine Soll-Temperatur von etwa 2100 °C mit einer Regelgenauigkeit von +/- 0.1°C gehalten. Dadurch können Temperaturschwankungen im Heißformprozess auf weniger als +/- 0.5°C begrenzt werden.

Durch Ziehen der Vorform zur Hohlkernfaser wird der vorhandene absolute Geometriefehler herunterskaliert, so dass in der Hohlkernfaser die aus den Antiresonanzelement-Vorformlingen erhaltenen Antiresonanzelemente eine maximale Abweichung von weniger als 3,5% in der Wanddicke aufweisen.

In der folgenden Tabelle sind Abmessungen von Vorformen in Abhängigkeit vom gewünschten Durchmesserverhältnis (OD/ID) zwischen dem Außen- und dem Innendurchmesser des Mantelbereichs der Hohlkernfaser zusammengefasst

**Tabelle 1**

| **Nr.** | **OD/ID** | **Faser-Außen-durchmesser / Innendurch-messer** | **Vorform-Au-ßendurch-messer (mm)** | **Cane-Innendurch-messer (mm)** | **Cane-Außen-durchmesser (mm)** |
|---|---|---|---|---|---|
| 1 | 2,3 | 230/98 | 90 | 38 | 46 |
| 2 | 2,9 | 230/80 | 90 | 31 | 39 |
| 3 | 2,0 | 200/98 | 90 | 44 | 53 |
| 4 | 2,3 | 230/98 | 30 | 13 | 15 |
| 5 | 2,9 | 230/80 | 30 | 10 | 13 |
| 6 | 2,0 | 200/98 | 30 | 15 | 18 |
| 7 | 3,0 | 230/98 | 50 | 16,8 | 22,2 |
| 8 | 2,3 | 230/98 | 25 | 11 | 13 |
| 9 | 2,3 | 230/98 | 100 | 43 | 51 |

Die maximale Abweichung der Wanddicke der Antiresonanzelement-Vorformlinge in der Vorform beträgt bei allen Ausführungsbeispielen etwa 4 µm. Aus den Vorformen wurden Hohlkernfasern mit einem Außendurchmesser von 200 µm beziehungsweise 230 mm gezogen, wie in der obigen Tabelle angegeben und die Wanddicken der Antiresonanzelemente wurden bestimmt. Bei allen Beispielen lag der Fehler in der Wanddicke der Antiresonanzelemente bei weniger als 3,5 % (bezogen auf die mittlere Wanddicke).

Das Beispiel Nr. 7 der Tabelle entspricht dem oben detailliert beschriebenen Ausführungsbeispiel. Die Beispiele 8 und 9 sind Vergleichsbeispiele. Beim Faserziehprozess unter Einsatz der Vorformen der Vergleichsbeispiele wurden jeweils Hohlkernfasern erhalten, bei denen der Fehler in der Wanddicke der Antiresonanzelemente bei mehr als 4 % lag. Beim Vergleichsbeispiel 8 wird dieses unzureichende Ergebnis auf das vergleichsweise kleine Ausziehverhältnis zurückgeführt, und beim Vergleichsbeispiel 9 auf Temperaturgradienten innerhalb des Vorformvolumens beim Faserziehprozess.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen einer primären Vorform für die Hohlkernfaser, die einen hohlen Kernbereich und einen Mantelbereich aufweist, der mindestens ein Hüllrohr (1) umfasst, das eine Hüllrohr-Innenbohrung und eine Hüllrohr-Längsachse aufweist, entlang der sich eine von einer Innenmantelfläche und einer Außenmantelfläche begrenzte Hüllrohr-Wandung (2) erstreckt, wobei im Mantelbereich eine Anzahl von rohrförmigen und/oder hohlkanalförmigen Antiresonanzelement-Vorformlingen (4) angeordnet sind, wobei gemäß Verfahrensschritt (a) eine primäre Vorform bereitgestellt wird, die einen Außendurchmesser im Bereich von 20 mm bis 70 mm aufweist,
(b) Weiterverarbeitung der primären Vorform zu einer sekundären Vorform, die eine einmalige oder wiederholte Durchführung von einem oder mehreren der folgenden Heißformprozesse umfasst:
(i)Aufkollabieren von zusätzlichem Mantelmaterial und anschließendes Elongieren,
(ii)Aufkollabieren von zusätzlichem Mantelmaterial und gleichzeitiges Elongieren, und
(c) Ziehen der Hohlkernfaser aus der sekundären Vorform,
**dadurch gekennzeichnet, dass** eine sekundäre Vorform gebildet wird, die einen Außendurchmesser im Bereich von 30 bis 90 mm aufweist, und
dass vor dem Ziehen der Hohlkernfaser gemäß Verfahrensschritt (c) mindestens eines der stirnseitigen Enden der Antiresonanzelement-Vorformlinge (4) verschlossen wird.

2. Verfahren nach Anspruch 1, **dadurch gekennzeichnet, dass** die primäre Vorform in der sekundären Vorform einen inneren Mantelbereich bildet, der einen Außendurchmesser im Bereich von 7 mm bis 50 mm aufweist.

3. Verfahren nach einem der vorhergehenden Ansprüche, **dadurch gekennzeichnet, dass** beim Ziehen der Hohlkernfaser gemäß Verfahrensschritt (c) im Kernbereich ein Innendruck im Bereich zwischen 0.05 mbar - 20 mbar eingestellt wird.

4. Verfahren nach einem der vorhergehenden Ansprüche, **dadurch gekennzeichnet, dass** beim Durchführen eines Prozesses gemäß Verfahrensschritt (b) ein temperaturgeregeltes Heizelement eingesetzt wird, dessen Soll-Temperatur auf +/- 0.1°C genau gehalten wird.

5. Verfahren nach einem der vorhergehenden Ansprüche, **dadurch gekennzeichnet, dass** das Bereitstellen der primären Vorform ein Anordnen der Antiresonanzelement-Vorformlinge (4) an Soll-Positionen der Innenseite der Hüllrohr-Wandung (2) umfasst, wobei das Anordnen der Antiresonanzelement-Vorformlinge und/oder das Ziehen der Hohlkernfaser gemäß Verfahrensschritt (c) eine Fixierungs-Maßnahme und/oder eine Versiegelungsmaßnahme unter Einsatz einer amorphe SiO₂-Partikel enthaltenden Versiegelungs- oder Verbindungsmasse (5) umfasst.

6. Verfahren nach einem der vorhergehenden Ansprüche, **dadurch gekennzeichnet, dass** das Bereitstellen der primären Vorform gemäß Verfahrensschritt (a) ein Anordnen der Antiresonanzelement-Vorformlinge (4) an Soll-Positionen der Innenseite der Hüllrohr-Wandung (2) umfasst, wobei das Anordnen der Antiresonanzelement-Vorformlinge mittels einer in die Hüllrohr-Innenbohrung einzuführenden Positionierungsschablone erfolgt, die Halteelemente zur Positionierung der Antiresonanzelement-Vorformlinge an den Soll-Positionen aufweist.

7. Verfahren nach Anspruch 6, **dadurch gekennzeichnet, dass** eine Positionierungsschablone mit einem in die Hüllrohr-Innenbohrung ragenden Schaft eingesetzt wird, der mit Halteelementen in Form mehrerer radial nach außen weisender Haltearme versehen ist.

8. Verfahren nach einem der vorhergehenden Ansprüche, **dadurch gekennzeichnet, dass** die Hüllrohr-Innenseite durch spanende Bearbeitung erzeugt wird, insbesondere durch Bohren, Fräsen, Schleifen, Honen und/oder Polieren.

9. Verfahren nach einem der vorhergehenden Ansprüche, **dadurch gekennzeichnet, dass** die Hüllrohr-Innenseite durch spanende Bearbeitung im Bereich der Soll-Positionen mit einer sich in Richtung der Hüllrohr-Längsachse erstreckenden Längsstruktur versehen wird.

10. Verfahren nach einem der vorhergehenden Ansprüche, **dadurch gekennzeichnet, dass** beim Ziehen der Hohlkernfaser gemäß Verfahrensschritt (c) mehrere Bestandteile der sekundären Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

11. Verfahren nach Anspruch 10, **dadurch gekennzeichnet, dass** gemäß Verfahrensschritt (b) zusätzliches Mantelmaterial aufkollabiert wird, und dass das Quarzglas des Hüllrohres (1) bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas des zusätzlich aufgebrachten Mantelmaterials (bei Angabe der Viskosität als logarithmischer Wert in dPa.s).

12. Verfahren zur Herstellung einer Vorform für eine Antiresonante Hohlkernfaser, die einen sich entlang einer Faser-Längsachse erstreckenden Hohlkern und einen den Hohlkern umgebenden Mantelbereich aufweist, der mehrere Antiresonanzelemente umfasst, mit den Verfahrensschritten:
(a) Bereitstellen einer primären Vorform für die Hohlkernfaser, die einen hohlen Kernbereich und einen Mantelbereich aufweist, der mindestens ein Hüllrohr (1) umfasst, das eine Hüllrohr-Innenbohrung und eine Hüllrohr-Längsachse aufweist, entlang der sich eine von einer Innenmantelfläche und einer Außenmantelfläche begrenzte Hüllrohr-Wandung (2) erstreckt, wobei im Mantelbereich eine Anzahl von rohrförmigen und/oder hohlkanalförmigen Antiresonanzelement-Vorformlingen (4) angeordnet sind, wobei gemäß Verfahrensschritt (a) eine primäre Vorform bereitgestellt wird, die einen Außendurchmesser im Bereich von 20 mm bis 70 mm aufweist, und
(b) Weiterverarbeitung der primären Vorform zu einer sekundären Vorform, die eine einmalige oder wiederholte Durchführung von einem oder mehreren der folgenden Heißformprozesse umfasst:
(i) Aufkollabieren von zusätzlichem Mantelmaterial und anschließendes Elongieren,
(ii)Aufkollabieren von zusätzlichem Mantelmaterial und gleichzeitiges Elongieren,
**dadurch gekennzeichnet, dass** eine sekundäre Vorform gebildet wird, die einen Außendurchmesser im Bereich von 30 bis 90 mm aufweist, und mindestens eines der stirnseitigen Enden der Antiresonanzelement-Vorformlinge (4) verschlossen ist.

## Claims

1. A method for producing an anti-resonant hollow-core fiber which comprises a hollow core extending along a longitudinal axis of the fiber and a casing region that surrounds the hollow core and comprises a plurality of anti-resonant elements, comprising the method steps of:
(a) providing a primary preform for the hollow core fiber, which comprises a hollow core region and a casing region comprising at least one sheath (1) which comprises a sheath inner bore and a sheath longitudinal axis along which a sheath wall (2) bounded by an inner casing surface and an outer casing surface extends, a plurality of tubular and/or hollow channel anti-resonant element preforms (4) being arranged in the casing region, according to method step (a), a primary preform being provided having an outer diameter in the range of 20 mm to 70 mm,
(b) further processing the primary preform to form a secondary preform, the further processing comprising carrying out one or more of the following hot-forming processes once or repeatedly:
(i) collapsing additional casing material and subsequent elongation,
(ii) collapsing additional casing material and simultaneous elongation, and
(c) drawing the hollow core fiber from the secondary preform,
**characterized in that** a secondary preform is formed which has an outer diameter in the range of 30 to 90 mm, and **in that** prior to drawing the hollow core fiber according to method step (c) at least one of the end-face ends of the anti-resonant element preforms (4) is closed.

2. The method according to claim 1, **characterized in that** the primary preform in the secondary preform forms an inner casing region which has an outer diameter in the range of 7 mm to 50 mm.

3. The method according to either of the preceding claims, **characterized in that** when drawing the hollow core fiber according to method step (c), an internal pressure in the core region is set in the range between 0.05 mbar - 20 mbar.

4. The method according to any of the preceding claims, **characterized in that** when carrying out a process according to method step (b) a temperature-controlled heating element is used, the target temperature of which is kept to an accuracy of +/- 0.1°C.

5. The method according to any of the preceding claims, **characterized in that** providing the primary preform comprises arranging the anti-resonant element preforms (4) at target positions on the inner side of the sheath wall (2), arranging the anti-resonant element preforms and/or drawing the hollow-core fiber according to method step (c) comprising a fixing measure and/or a sealing measure using a sealing or bonding compound (5) containing amorphous SiO₂ particles.

6. The method according to any of the preceding claims, **characterized in that** providing the primary preform according to method step (a) comprises arranging the anti-resonant element preforms (4) at target positions on the inner side of the sheath wall (2), arranging the anti-resonant element preforms being carried out by means of a positioning template to be inserted into the inner bore of the sheath, which positioning template comprises retaining elements for positioning the anti-resonant element preforms at the target positions.

7. The method according to claim 6, **characterized in that** a positioning template comprising a shaft that projects into the inner bore of the sheath is inserted, which shaft is provided with retaining elements in the form of a plurality of retaining arms pointing radially outward.

8. The method according to any of the preceding claims, **characterized in that** the inner side of the sheath is produced by machining, in particular by drilling, milling, grinding, honing and/or polishing.

9. The method according to any of the preceding claims, **characterized in that** the inner side of the sheath is provided with a longitudinal structure extending in the direction of the longitudinal axis of the sheath, by machining in the region of the target positions.

10. The method according to any of the preceding claims, **characterized in that**, when drawing the hollow-core fiber according to method step (c), a plurality of components of the secondary preform made of fused silica are heated and softened together, the fused silica of at least some of the preform components containing at least one dopant which lowers the viscosity of fused silica.

11. The method according to claim 10, **characterized in that** additional casing material is collapsed according to method step (b), and **in that** the fused silica of the sheath (1) at a measuring temperature of 1250°C has a viscosity which is at least 0.5 dPa·s higher, preferably a viscosity which is at least 0.6 dPa·s higher, than the fused silica of the additionally applied casing material (when the viscosity is given as a logarithmic value in dPa·s).

12. A method for producing a preform for an anti-resonant hollow-core fiber which comprises a hollow core extending along a longitudinal axis of the fiber and a casing region that surrounds the hollow core and comprises a plurality of anti-resonant elements, comprising the method steps of:
(a) providing a primary preform for the hollow core fiber, which comprises a hollow core region and a casing region comprising at least one sheath (1) comprising a sheath inner bore and a sheath longitudinal axis along which a sheath wall (2) bounded by an inner casing surface and an outer casing surface extends, a plurality of tubular and/or hollow channel anti-resonant element preforms (4) being arranged in the casing region, according to method step (a), a primary preform being provided having an outer diameter in the range of 20 mm to 70 mm, and
(b) further processing the primary preform to form a secondary preform, the further processing comprising carrying out one or more of the following hot-forming processes once or repeatedly:
(i) collapsing additional casing material and subsequent elongation,
(ii) collapsing additional casing material and simultaneous elongation,
**characterized in that** a secondary preform is formed which has an outer diameter in the range of 30 to 90 mm, and at least one of the end-face ends of the anti-resonant element preforms (4) is closed.

## Revendications

1. Procédé pour la fabrication d'une fibre à cœur creux antirésonante qui présente un cœur creux s'étendant le long d'un axe longitudinal de fibre et une zone enveloppante entourant le cœur creux, laquelle comprend plusieurs éléments antirésonance, comportant les étapes de procédé consistant à :
(a) fournir une préforme primaire pour la fibre à cœur creux, laquelle préforme présente une zone de cœur creuse et une zone enveloppante qui comprend au moins un tube de gaine (1) qui présente un alésage interne de tube de gaine et un axe longitudinal de tube de gaine le long duquel s'étend une paroi de tube de gaine (2) délimitée par une surface enveloppante interne et une surface enveloppante externe, dans lequel un certain nombre de préformes d'éléments antirésonance (4) tubulaires et/ou en forme de canaux creux sont disposées dans la zone enveloppante, dans lequel une préforme primaire est fournie selon l'étape de procédé (a), laquelle préforme présente un diamètre externe dans la plage allant de 20 mm à 70 mm,
(b) traiter ultérieurement la préforme primaire en une préforme secondaire, le traitement ultérieur comprenant une réalisation unique ou répétée d'un ou de plusieurs des procédés de thermoformage suivants :
(i) écrasement d'un matériau enveloppant supplémentaire et allongement consécutif,
(ii) écrasement d'un matériau enveloppant supplémentaire et allongement simultané, et
(c) étirer la fibre à cœur creux à partir de la préforme secondaire,
**caractérisé en ce qu'**une préforme secondaire est formée, laquelle présente un diamètre externe dans la plage allant de 30 à 90 mm, **et en ce que,** avant l'étirage de la fibre à cœur creux selon l'étape de procédé (c), au moins l'une des extrémités côté frontal des préformes d'éléments antirésonance (4) est obturée.

2. Procédé selon la revendication 1, **caractérisé en ce que** la préforme primaire forme dans la préforme secondaire une zone enveloppante interne qui présente un diamètre externe dans la plage allant de 7 mm à 50 mm.

3. Procédé selon l'une des revendications précédentes, **caractérisé en ce que,** lors de l'étirage de la fibre à cœur creux selon l'étape de procédé (c), une pression interne est réglée dans une plage comprise entre 0,05 mbar et 20 mbar dans la zone de cœur.

4. Procédé selon l'une des revendications précédentes, **caractérisé en ce que,** lors de la réalisation d'un processus selon l'étape de procédé (b), un élément chauffant à température régulée est utilisé, dont la température de consigne est maintenue à +/- 0,1 °C près.

5. Procédé selon l'une des revendications précédentes, **caractérisé en ce que** la fourniture de la préforme primaire comprend une disposition des préformes d'éléments antirésonance (4) à des positions de consigne du côté interne de la paroi de tube de gaine (2), dans lequel la disposition des préformes d'éléments antirésonance et/ou l'étirage de la fibre à cœur creux selon l'étape de procédé (c) comprennent une mesure de fixation et/ou une mesure de scellement en utilisant une matière de scellement ou de liaison (5) contenant des particules amorphes de SiO₂.

6. Procédé selon l'une des revendications précédentes, **caractérisé en ce que** la fourniture de la préforme primaire selon l'étape de procédé (a) comprend une disposition des préformes d'éléments antirésonance (4) à des positions de consigne du côté interne de la paroi de tube de gaine (2), dans lequel la disposition des préformes d'éléments antirésonance est effectuée au moyen d'un gabarit de positionnement à insérer dans l'alésage interne de tube de gaine, lequel gabarit de positionnement présente des éléments de maintien pour le positionnement des préformes d'éléments antirésonance aux positions de consigne.

7. Procédé selon la revendication 6, **caractérisé en ce qu'**un gabarit de positionnement est introduit avec une tige faisant saillie dans l'alésage interne de tube de gaine, laquelle tige est pourvue d'éléments de maintien sous la forme de plusieurs bras de maintien dirigés radialement vers l'extérieur.

8. Procédé selon l'une des revendications précédentes, **caractérisé en ce que** le côté interne de tube de gaine est obtenu par usinage par enlèvement de matière, en particulier par perçage, fraisage, meulage, rodage et/ou polissage.

9. Procédé selon l'une des revendications précédentes, **caractérisé en ce que** le côté interne de tube de gaine est pourvu, par usinage par enlèvement de matière, dans la zone des positions de consigne, d'une structure longitudinale s'étendant dans la direction de l'axe longitudinal de tube de gaine.

10. Procédé selon l'une des revendications précédentes, **caractérisé en ce que,** lors de l'étirage de la fibre à cœur creux selon l'étape de procédé (c), plusieurs constituants de la préforme secondaire en verre de quartz sont chauffés et ramollis ensemble, dans lequel le verre de quartz d'au moins quelques-uns des constituants de préforme contient au moins un dopant qui abaisse la viscosité du verre de quartz.

11. Procédé selon la revendication 10, **caractérisé en ce que,** selon l'étape de procédé (b), un matériau enveloppant supplémentaire est écrasé et **en ce que** le verre de quartz du tube de gaine (1) présente, à une température de mesure de 1 250 °C, une viscosité supérieure d'au moins 0,5 dPa·s, de préférence une viscosité supérieure d'au moins 0,6 dPa·s, à celle du verre de quartz du matériau enveloppant supplémentaire appliqué (avec une indication de la viscosité en tant que valeur logarithmique en dPa·s).

12. Procédé pour la fabrication d'une préforme pour une fibre à cœur creux antirésonante qui présente un cœur creux s'étendant le long d'un axe longitudinal de fibre et une zone enveloppante entourant le cœur creux, laquelle zone enveloppante comprend plusieurs éléments antirésonance, comportant les étapes de procédé consistant à :
(a) fournir une préforme primaire pour la fibre à cœur creux, laquelle préforme présente une zone de cœur creuse et une zone enveloppante qui comprend au moins un tube de gaine (1) qui présente un alésage interne de tube de gaine et un axe longitudinal de tube de gaine le long duquel s'étend une paroi de tube de gaine (2) délimitée par une surface enveloppante interne et une surface enveloppante externe, dans lequel un certain nombre de préformes d'éléments antirésonance (4) tubulaires et/ou en forme de canaux creux sont disposées dans la zone enveloppante, dans lequel une préforme primaire est fournie selon l'étape de procédé (a), laquelle préforme présente un diamètre externe dans la plage allant de 20 mm à 70 mm, et
(b) traiter ultérieurement la préforme primaire en une préforme secondaire, le traitement ultérieur comprenant une réalisation unique ou répétée d'un ou de plusieurs des procédés de thermoformage suivants :
(i) écrasement d'un matériau enveloppant supplémentaire et allongement consécutif,
(ii) écrasement d'un matériau enveloppant supplémentaire et allongement simultané,
**caractérisé en ce qu'**une préforme secondaire est formée, laquelle présente un diamètre externe dans la plage allant de 30 à 90 mm, et au moins l'une des extrémités côté frontal des préformes d'éléments antirésonance (4) est obturée.
